# EUROPÄISCHE PATENTSCHRIFT

(11) **EP 3 616 335 B1**
(45) Veröffentlichungstag und Bekanntmachung des Hinweises auf die Patenterteilung: **12.03.2025**
(21) Anmeldenummer: 18730293.0
(22) Anmeldetag: 01.06.2018
(51) Int. Cl.: H04B 7/26, B61L 27/00, H04W 84/00

(54) **KOMMUNIKATIONSNETZWERK UND VERFAHREN ZUM BETRIEB EINES KOMMUNIKATIONSNETZWERKES**
COMMUNICATIONS NETWORK AND METHOD FOR USING THE COMMUNICATIONS NETWORK
RÉSEAU DE COMMUNICATION ET PROCÉDÉS D'UTILISATION

(30) Priorität: 23.06.2017 DE 102017210668
(43) Veröffentlichungstag der Anmeldung: 04.03.2020
(73) Patentinhaber: Siemens Mobility GmbH, 81739 München (DE)
(72) Erfinder: FAROOQ, Jahanzeb, 2765 Smorum (DK); BRO, Lars, 3650 lstykke (DK); KARSTENSEN, Rasmus Thystrup, 2620 Albertslund (DK)
(74) Vertreter: Siemens Patent Attorneys
(86) Internationale Anmeldenummer: PCT/EP2018/064434
(87) Internationale Veröffentlichungsnummer: WO 2018/234010

(56) Entgegenhaltungen:
- EP-B1- 3 558 789
- US-A- 4 209 749
- US-A1- 2008 095 134

## Beschreibung

Die Erfindung betrifft ein Kommunikationsnetzwerk, insbesondere ein Ad-hoc-Kommunikationsnetzwerk, mit zumindest einer mobilen Funkeinrichtung und mit einer Mehrzahl von an einer Fahrstrecke der mobilen Funkeinrichtung installierten weiteren Funkeinrichtungen), welche nachfolgend als fahrstreckenseitige Funkeinrichtungen bezeichnet sind.

Aus der Druckschrift US 4 209 749 A ist ein gattungsgemäßes Kommunikationsnetzwerk bekannt, bei welchem eine jeweilige der weiteren Funkeinrichtungen geeignet ausgebildet ist, sich in jeder der beiden Richtungen der Strecke zur Kommunikation mit einer der anderen der weiteren Funkeinrichtungen, nämlich mit der in der jeweiligen Richtung benachbarten der anderen der weiteren Funkeinrichtungen, jeweils eines Funkkanalpaares zu bedienen. Hier bilden jeweils zwei Relaisstationen und eine zwischen ihnen angeordnete Hauptstation einen jeweiligen Übertragungsabschnitt, wobei die Übergänge zwischen benachbarten Übertragungsabschnitten von weiteren Relaisstationen gebildet sind. Eine gegenseitige Entkopplung aufeinanderfolgender Übertragungsabschnitte längs der Strecke wird durch alternierenden Wechsel zweier Frequenzpaare von Übertragungsabschnitt zu Übertragungsabschnitt vorgenommen. Die zumindest eine mobile Funkeinrichtung weist dabei eine Frequenzumschalteinrichtung für einen automatischen Frequenzpaarwechsel bei einem Übergang in den jeweils nächsten Übertragungsabschnitt auf.

Weiterhin ist aus der Druckschrift US 2008/095134 A1 ein gattungsgemäßes Kommunikationsnetzwerk bekannt, welches als Ad-hoc-Kommunikationsnetzwerk ausgebildet ist. Die Übertragung von Signalen erfolgt über einzelne Kommunikationskanäle, wie etwa einzelne physikalische Funkverbindungen. Straßenrandeinheiten kommunizieren dabei beispielsweise über einen dezidierten R-R-Kanal miteinander. Für die Kanalteilung zwischen Fahrzeug-Fahrzeug(V-V)-Kanälen und Fahrzeug-zu-Straßenrand(V-R)-Kanälen sind mehrere Alternativen vorgesehen.

In der Druckschrift DE 10 2017 203 040 A1 ist ein Kommunikationsnetzwerk mit den Merkmalen des Oberbegriffes des Patentanspruches 1 beschrieben.

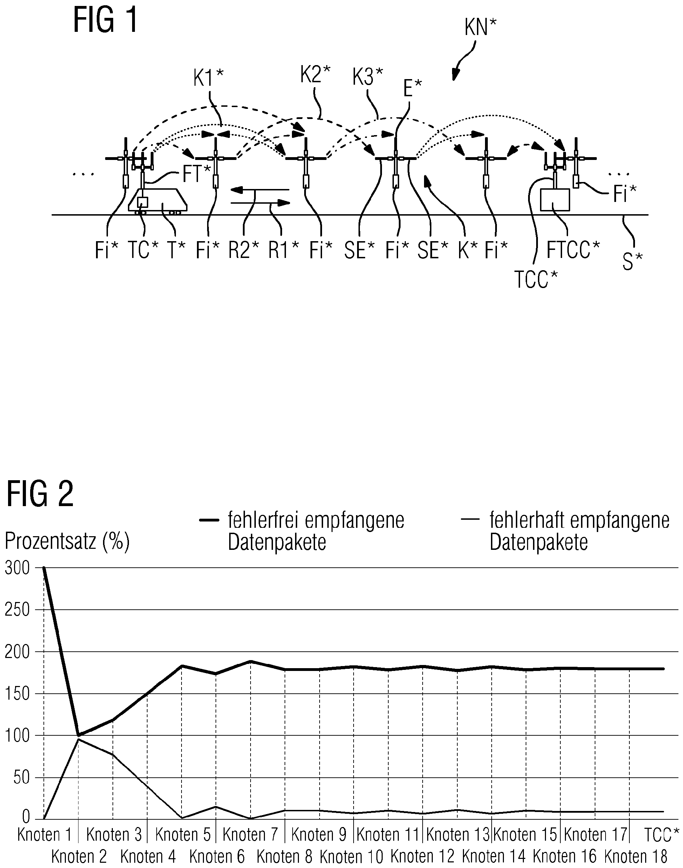

Die Figur 1 zeigt auch ein Kommunikationsnetzwerk KN* in Form eines Ad-hoc-Kommunikationsnetzwerkes mit einer mobilen Funkeinrichtung FT* und mit einer Mehrzahl von an einer Strecke installierten weiteren Funkeinrichtungen Fi*, welche im Weiteren auch als Knoten bezeichnet sind. Mit der mobilen Funkeinrichtung FT* ist ein Kommunikationsteilnehmer, insbesondere eine fahrzeugseitige Kontroll- und Steuereinheit TC*, verbunden ist, welcher in einem spurgebundenen Fahrzeug in Form eines Zuges T installiert ist. Das in Figur 1 gezeigte Kommunikationsnetzwerk KN* weist auch noch eine andere Funkeinrichtung FTCC* auf, mit der ein anderer Kommunikationsteilnehmer verbunden ist. Der andere Kommunikationsteilnehmer ist eine streckenseitige Kontroll- und Steuereinheit TCC* in Form eines sogenannten Traffic Control Centers. Die mobile Funkeinrichtung FT* befindet sich hier an einem linken Ende einer von vier der weiteren Funkeinrichtungen gebildeten Kette K*. Die andere Funkeinrichtung FTCC* befindet sich an einem rechten Ende dieser Kette K*. Daher werden die mobile Funkeinrichtung FT* und die andere Funkeinrichtung FTCC* im Weiteren auch als Seitenfunkeinrichtungen bezeichnet. Sendet die mobilen Funkeinrichtung FT*, welche datenübertragungstechnisch in geeigneter Weise mit der fahrzeugseitige Kontroll- und Steuereinheit TC* verbunden ist, von der fahrzeugseitigen Kontroll- und Steuereinheit bereitgestellte Daten in Form von Datenpaketen aus, so werden diese mittels der Knoten Fi* weitergeleitet. Die Daten werden also über die Kette K* zu der anderen Funkeinrichtung FTTC* übermittelt und stehen damit dem Traffic Control Center TCC*, welches mit der anderen Funkeinrichtung datenübertragungstechnisch in geeigneter Weise verbunden ist, zur Verfügung.

Jede der weiteren Funkeinrichtungen Fi* - also jeder der Knoten K* -ist mit drei Funkgeräten ausgestattet, die sich jeweils auf verschiedenen Frequenzen befinden, sich also verschiedener Funkkanäle K1*, K2* und K3* bedienen. Dies ist in der Figur 1 durch gepunktete für K1*, gestrichelte für K2* und strichpunktierte für K3* Linien verdeutlicht. Diese drei Frequenzen bzw. Funkkanäle K1*, K2* und K3* werden dann auf alternierende (abwechselnde) Weise in den nachfolgenden Knoten verwendet. Auf diese Weise wird eine bestimmte Frequenztrennung eingeführt, die Störungen minimiert.

Zwei der drei Funkgeräte, welche im Weiteren auch als Seitenfunkgeräte bezeichnete sind, sind jeweils als Sende- und Empfangseinheit SE* für eine bidirektionale Kommunikation geeignet ausgebildet, indem sie jeweils eine seitlich angeordnete Richtantenne verwenden. Um Redundanz einzuführen, sendet ein Seitenfunkgerät SE* eines Knoten nicht nur zu dem unmittelbar benachbarten Knoten, sondern auch zu dem diesen folgenden Knoten. Das oben angeordnete dritte Funkgerät ist als Empfangseinheit E* zum Empfang von Datenpaketen von den direkt benachbarten Knoten - aus beiden Richtungen R1* und R2* der Strecke - geeignet ausgebildet, indem es mit einer omnidirektionalen Antenne ausgestattet ist.

Wenn ein jeweiliger Knoten Fi* von einem anderen Knoten ein Datenpaket auf irgendeinem der drei Funkgeräte empfängt, leitet er das Datenpaket zu dem benachbarten Knoten und dem diesen unmittelbar folgenden Knoten - also zu dem nächsten und dem übernächsten Knoten weiter. Er sendet das Datenpacket also in der gleichen Richtung weiter, da Datenpakete, welche von einem Knoten in einer bestimmten Richtung zu einem nächsten bzw. übernächsten Knoten weitergeleitet werden, mit einer zusätzlichen Information versehen werden, anhand derer der nächste bzw. übernächste Knoten, welcher das Datenpaket empfängt, erkennen kann, dass er das Datenpaket in dieser bestimmten Richtung weiterzuleiten hat.

Im Gegensatz zu den Knoten der Kette K* sind die beiden Seitenfunkeinrichtungen - also die mobile Funkeinrichtung FT* und die andere Funkeinrichtung FTCC* - jeweils mit drei Funkgeräten versehen, wobei jedes der Funkgeräte als eine Sende- und Empfangseinheit SE1*, SE2* bzw. SE3* mit jeweils einer omnidirektionalen Antenne ausgebildet ist, um sich der drei Funkkanäle sowohl zum Empfangen von Daten als auch zum Senden von Daten zu bedienen - und zwar jeweils in allen Richtungen - also jeweils omnidirektional. Auf diese Weise ist die fahrzeugseitige Kontroll- und Steuereinheit TC* des Zuges T* immer in der Lage, mit einem jeweiligen der Knoten Fi* der Kette K* zu kommunizieren, ungeachtet der Ausrichtung der Antennen des jeweiligen Knotens der Kette relativ zu den Antennen der mobilen Funkeinrichtung FT* des Zuges.

Eine Leistungsevaluierung dieses Kommunikationsnetzwerkes KN*, welche unter Verwendung von Computersimulationen zu verschiedenen Szenarien durchgeführt wurde, hat jedoch gezeigt, dass bei diesem Kommunikationsnetzwerk Übertragungen von der mobilen Funkeinrichtung FT* die Übertragungen der ihr nächstgelegenen 1 bis 3 Knoten der Kette K* stören (zu erkennen in Figur 1, beim zweiten Knoten, an dessen oben angeordnetes drittes Funkgerät - also auf dem gleichen Funkkanal K2* - die Datenpakete sowohl von der mobilen Funkeinrichtung FT* als auch vom ersten Knoten übertragen werden). Die bei diesen Übertragungen auftretenden Störungen führen zu einem Verlust von Datenpaketen. Bei dem in der Figur 2 gezeigten Szenario mit einer mobilen Funkeinrichtung FT* eines Zuges T*, einer anderen Funkeinrichtung FTCC* eines streckenseitige Kontroll- und Steuereinheit TCC* und einer Kette K* von 20 Knoten führen die Störungen gemäß der verwendeten Computersimulationen zu einem Verlust an Datenpaketen in Höhe von 5,63%. Computersimulationen zu anderen Szenarien mit zwei mobilen Funkeinrichtungen (2-Zug-Szenarien) ergaben, Verluste von Datenpaketen bis zu 20%.

In Figur 2 stellt die Y-Achse des dargestellten Diagramms die Anzahl empfangener Datenpakete als Prozentsatz der ursprünglichen gesendeten Datenpakete dar. Da ein Knoten ein Datenpaket zum nächsten Knoten und zum übernächsten Knoten weiterleitet, sollte ein gegebener Knoten im Idealfall zwei Kopien eines Datenpakets empfangen, d.h. 200% empfangene Gesamtpakete. Die obere Linie zeigt dabei den Prozentsatz der fehlerfrei empfangenen Datenpakete. Entsprechend zeigt die untere Linie den Prozentsatz der fehlerhaften Datenpakete.

Der Erfindung liegt die Aufgabe zu Grunde, ein Kommunikationsnetzwerk ohne bzw. mit minimalem Datenpaketverlust zu schaffen.

Gelöst wird diese Aufgabe mit einem Kommunikationsnetzwerk gemäß Patentanspruch 1.

Wie im Weiteren noch gezeigt, haben Computersimulationen ergeben, dass bei einer derartigen Ausgestaltung eines Kommunikationsnetzwerkes die Datenpaketverluste sehr gering sind.

Dadurch, dass die fahrstreckenseitigen Funkeinrichtungen dabei derart ausgebildet sind, dass sich jeweilige drei aufeinanderfolgende der fahrstreckenseitigen Funkeinrichtungen in alternierender Weise der drei Funkkanäle bedienen, kann das sogenannte "Hidden-Node-Problem" besonders gut gelöst werden.

Mit der mobilen Funkeinrichtung kann ein Kommunikationsteilnehmer, insbesondere eine fahrzeugseitige Kontroll- und Steuereinheit, verbunden sein, welcher in einem Fahrzeug, insbesondere einem spurgebundenen Fahrzeug, installiert ist.

Außerdem kann zumindest ein anderer Kommunikationsteilnehmer, insbesondere eine streckenseitige Kontroll- und Steuereinheit, mit einer der fahrstreckenseitigen Funkeinrichtungen oder mit einer anderen Funkeinrichtung verbunden sein.

Dabei wird es als vorteilhaft angesehen, wenn
- die andere Funkeinrichtung für jeden der drei Funkkanäle jeweils eine Empfangseinheit enthält und eingerichtet ist, sich der drei Funkkanäle ausschließlich zum Empfang von Daten, nämlich zum Empfang von Daten von den fahrstreckenseitigen Funkeinrichtungen zu bedienen,
- die andere Funkeinrichtung eine Sendeeinheit enthält, die ausgebildet ist, sich des zusätzlichen vierten Funkkanals ausschließlich zum Versand von Daten, nämlich zum Versand von Daten an die fahrstreckenseitigen Funkeinrichtungen, zu bedienen, und
- die jeweilige zweite Empfangseinheit der fahrstreckenseitigen Funkeinrichtungen jeweils eingerichtet ist, sich des zusätzlichen vierten Funkkanals auch zum Empfang von Daten von der anderen Funkeinrichtung zu bedienen.

Die Erfindung betrifft auch ein Verfahren zum Betrieb eines Kommunikationsnetzwerkes gemäß Patentanspruch 5.

Hinsichtlich der Vorteile des erfindungsgemäßen Verfahrens sei auf die Vorteile des erfindungsgemäßen Kommunikationsnetzwerkes verwiesen, da die Vorteile des erfindungsgemäßen Verfahrens den Vorteilen des erfindungsgemäßen Kommunikationsnetzwerkes im Wesentlichen entsprechen.

Es wird als vorteilhaft angesehen, wenn mit der mobilen Funkeinrichtung ein Kommunikationsteilnehmer, insbesondere eine fahrzeugseitige Kontroll- und Steuereinheit, verbunden wird, welcher in einem Fahrzeug, insbesondere einem spurgebundenen Fahrzeug, installiert wird.

Zumindest ein anderer Kommunikationsteilnehmer, insbesondere eine streckenseitige Kontroll- und Steuereinheit, kann in vorteilhafter Weise mit einer der fahrstreckenseitigen Funkeinrichtungen oder mit einer anderen Funkeinrichtung verbunden werden.

Dabei wird es als vorteilhaft angesehen, wenn
- die andere Funkeinrichtung für jeden der drei Funkkanäle jeweils eine Empfangseinheit enthält und sich der drei Funckanäle ausschließlich zum Empfang von Daten, nämlich zum Empfang von Daten von den fahrstreckenseitigen Funkeinrichtungen bedient,
- die andere Funkeinrichtung eine Sendeeinheit enthält, die sich des zusätzlichen vierten Funkkanals ausschließlich zum Versand von Daten, nämlich zum Versand von Daten an die fahrstreckenseitigen Funkeinrichtungen, bedient, und
- die jeweilige zweite Empfangseinheit der fahrstreckenseitigen Funkeinrichtungen sich jeweils des zusätzlichen vierten Funkkanals auch zum Empfang von Daten von der anderen Funkeinrichtung bedient

Die Erfindung ist im Weiteren anhand der Figuren 3 bis 5 näher erläutert. Dabei zeigen, die
- Figur 3: einen Ausschnitt eines erfindungsgemäßen Kommunikationsnetzwerkes mit einer mobilen Funkeinrichtung, einer anderen Funkeinrichtung und einer Mehrzahl weiterer Funkeinrichtungen, welche eine Kette von Knoten bilden, die
- Figur 4: einen Abschnitt der Kette aus Figur 3 mit fünf benachbarten weiteren Funkeinrichtungen und
- Figur 5: ein Ergebnis einer Computersimulation, welche zu einem Szenario des erfindungsgemäßen Kommunikationsnetzwerkes durchgeführt wurde.

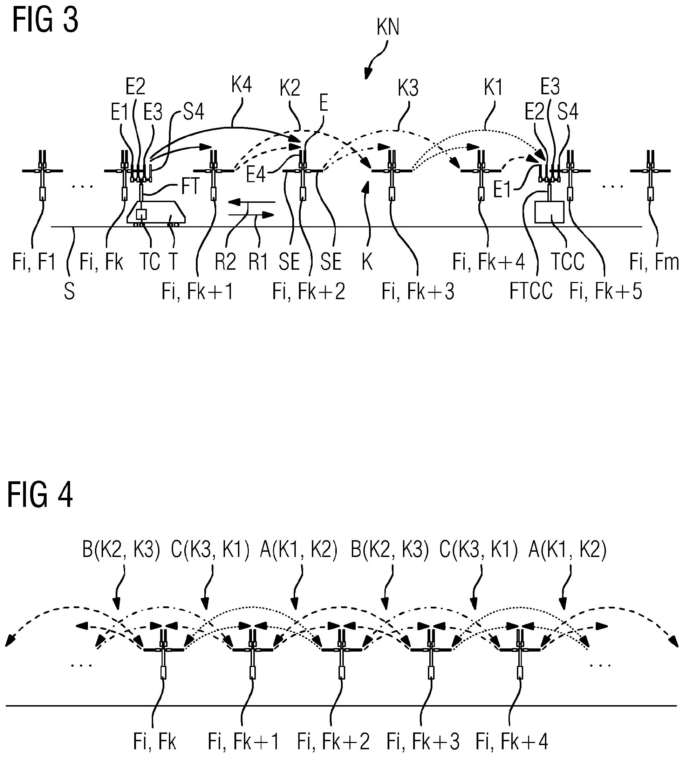

Die Figur 3 zeigt ein erfindungsgemäßes Kommunikationsnetzwerk KN ohne Netzwerk-Backbone, welches zur Gewährleistung einer kontinuierlichen Kommunikationsverbindung zwischen einer mobilen Funkeinrichtung FT eines Kommunikationsteilnehmers TC und einer anderen Funkeinrichtung FTCC eines anderen Kommunikationsteilnehmers TCC geeignet ausgebildet ist.

Der hier gezeigte eine Kommunikationsteilnehmer TC ist in einem Fahrzeug - hier einem spurgebundenen Fahrzeug in Form eines Zuges T - installiert. Der eine Kommunikationsteilnehmer TC ist hier eine fahrzeugseitige Kontroll- und Steuereinheit, welche der mobilen Funkeinrichtung FT über die gezeigte Verbindung zu versendende Datenpakete bereitstellen bzw. von dieser mobilen Funkeinrichtung empfangene Datenpakete entgegennehmen kann.

Der hier gezeigte andere Kommunikationsteilnehmer TCC ist eine streckenseitige Kontroll- und Steuereinheit. Diese könnte mit einer der weiteren Funkeinrichtungen Fi* in datentechnisch geeigneter Weise verbunden werden, um zu versendende Datenpakete bereitzustellen bzw. um empfangene Datenpakete entgegenzunehmen. Bei dem gezeigten Kommunikationsnetzwerk KN ist die streckenseitige Kontroll- und Steuereinheit TCC jedoch über eine Verbindung in datentechnisch geeigneter Weise mit der anderen Funkeinrichtung FTCC verbunden, um der anderen Funkeinrichtung FTCC zu versendende Datenpakete bereitzustellen bzw. um von der anderen Funkeinrichtung FTCC empfangene Datenpakete entgegenzunehmen.

Der dargestellte Ausschnitt des Kommunikationsnetzwerkes KN zeigt von der Mehrzahl m der weiteren Funkeinrichtungen acht Stück, nämlich eine erste F1, sechs aufeinander folgende Fk, Fk+1, Fk+2, Fk+3, Fk+4, Fk+5 sowie eine letzte Fm.

Eine jeweilige Fi von den i=1,2,...,k,k+1,k+2,k+3,k+4,k+5,...,bis m der weiteren Funkeinrichtungen ist geeignet ausgebildet, sich in jeder der beiden Richtungen R1 und R2 der Strecke S zur Kommunikation mit anderen der weiteren Funkeinrichtungen jeweils eines Funkkanalpaares A, B oder C zu bedienen.

Das mit A bezeichnete Funkkanalpaar besteht dabei aus den Funkkanälen K1 und K2. Das mit B bezeichnete Funkkanalpaar besteht aus den Funkkanälen K2 und K3. Das Funkkanalpaar C besteht aus den Funkkanälen K3 und K1.

Dabei sind die Funkkanalpaare A, B und C derart aus den drei Funkkanälen K1, K2 und K3 gebildet, dass sich die Funkkanalpaare A und B bzw. B und C bzw. C und A, einer jeweiligen Fi der weiteren Funkeinrichtungen hinsichtlich eines Funkkanals unterscheiden. Jeweilige drei aufeinanderfolgende der weiteren Funkeinrichtungen bedienen sich in alternierender Weise der drei Funkkanäle.

Die mobile Funkeinrichtung FT ist geeignet ausgebildet, sich aller Funkkanäle K1, K2, K3 der Funkkanalpaare A, B und C ausschließlich zum Empfang von Daten, insbesondere von den weiteren Funkeinrichtungen zu bedienen.

Es ist ein zusätzlicher Funkkanal K4 vorgesehen.

Die mobile Funkeinrichtung FT ist geeignet ausgebildet, sich des zusätzlichen Funkkanals K4 ausschließlich zum Versand von Daten, insbesondere an die weiteren Funkeinrichtungen Fi, zu bedienen.

Die weiteren Funkeinrichtungen Fi sind geeignet ausgebildet, sich des zusätzlichen Funkkanals K4 ausschließlich zum Empfang von Daten, insbesondere von der mobilen Funkeinrichtung FT, zu bedienen.

Jede Funkeinrichtung Fi weist eine Empfangseinheit E zum Empfang von Daten von den ihr direkt benachbarten weiteren Funkeinrichtungen sowie zwei Sende- und Empfangseinheiten SE, SE auf. Jede der beiden Sende- und Empfangseinheiten SE, SE dient jeweils zu einer bidirektionalen Kommunikation mit einer der weiteren Funkeinrichtungen, welche einer der direkt benachbarten weiteren Funkeinrichtung nachfolgt.

Auch hier ist es so, dass, wenn ein jeweiliger Knoten Fi von einem anderen Knoten ein Datenpaket auf irgendeinem der drei Funkgeräte empfängt, er dieses Datenpaket zu dem benachbarten Knoten und dem diesen unmittelbar folgenden Knoten - also zu dem nächsten und dem übernächsten Knoten weiterleitet. Er sendet das Datenpacket also in der gleichen Richtung weiter, da Datenpakete, welche von einem Knoten in einer bestimmten Richtung zu einem nächsten bzw. übernächsten Knoten weitergeleitet werden, mit einer zusätzlichen Information versehen werden, anhand derer der nächste bzw. übernächste Knoten, welcher das Datenpaket empfängt, erkennen kann, dass er das Datenpaket in dieser bestimmten Richtung weiterzuleiten hat.

Lediglich ein Knoten, der ein Datenpaket von der mobilen Funkeinrichtung empfängt, leitet das Datenpaket zunächst in beide Richtungen R1 und R2 der Strecke weiter (in der Figur 3 beispielsweise der Knoten Fk+1). Genauso verhält es sich, wenn ein Knoten ein Datenpaket von der anderen Funkeinrichtung empfängt.

Die Kommunikation und Datenübertragung erfolgt über die drei verschiedene Funkkanäle K1, K2, K3 in einem räumlich alternierenden Muster.

Dieses Muster ist im Folgenden anhand des in der Figur 4 gezeigten Ausschnitts erläutert.

Die weitere Funkeinrichtung Fk+1 ist dazu eingerichtet, Daten von den ihr direkt benachbarten weiteren Funkeinrichtungen Fk und Fk+2 über einen der drei Kanäle - nämlich dem im Weiteren auch als erster Kanal bezeichneten Kanal K1 - mittels ihrer Empfangseinheit E zu empfangen. Der Kanal K1 ist jeweils mit gepunkteter Linie dargestellt.

Die in der Richtung R1 nächste - also in Richtung R1 zu Fk+1 benachbarte - weitere Funkeinrichtung Fk+2 ist dazu eingerichtet, Daten von ihren beiden direkt benachbarten fahrstreckenseitigen Funkeinrichtungen Fk+1 und Fk+3 über einen anderen der drei Funkkanäle - nämlich dem im Weiteren auch als zweiter Kanal bezeichneten Kanal K2 - mittels ihrer Empfangseinheit E zu empfangen. Der Kanal K2 ist jeweils mit gestrichelter Linie dargestellt.

Die in der Richtung R1 folgende - also in Richtung R1 zu Fk+2 benachbarte - weitere Funkeinrichtung Fk+3 ist dazu eingerichtet, Daten von ihren beiden direkt benachbarten fahrstreckenseitigen Funkeinrichtungen Fk+2 und Fk+4 über einen anderen der drei Funkkanäle - nämlich dem im Weiteren auch als dritter Kanal bezeichneten Kanal K3 - mittels ihrer Empfangseinheit E zu empfangen. Der Kanal K3 ist jeweils mit strichpunktierter Linie dargestellt.

Wiederholungen dieses Musters entlang der Strecke S entsprechend ist die der weiteren Funkeinrichtung Fk+3 in Richtung R1 folgende weitere Funkeinrichtung Fk+4 dazu eingerichtet,

Daten von ihren beiden direkt benachbarten fahrstreckenseitigen Funkeinrichtungen Fk+3 und Fk+5(vgl. Figur 4) über den ersten Kanal K1 mittels ihrer Empfangseinheit E zu empfangen.

Und die der weiteren Funkeinrichtung Fk+1 in Richtung R1 vorgelagerte - also in Richtung R2 benachbarte weitere Funkeinrichtung Fk dazu eingerichtet, Daten von ihren beiden direkt benachbarten fahrstreckenseitigen Funkeinrichtungen Fk-1 (nicht gezeigt) und Fk+1 über dritten Kanal K3 mittels ihrer Empfangseinheit E zu empfangen.

Jeweilige drei aufeinanderfolgende der weiteren Funkeinrichtungen, beispielsweise Fk, Fk+1 und Fk+2, bedienen sich in alternierender Weise der drei Funkkanäle.

Mit anderen Worten werden Datenpakete entlang der Fahrstrecke S in jeder Richtung jeweils unidirektional weitergeleitet, indem sich die weiteren Funkeinrichtungen Fi der drei Funkkanäle K1, K2 und K3 in alternierender Weise bedienen.

Gemäß Figur 4 kommuniziert die weitere Funkeinrichtung Fk+2 mit ihrem übernächsten rechten Nachbarn Fk+4 bidirektional auf dem dritten Kanal K3. Ferner kommuniziert sie mit dem übernächsten linken Nachbarn Fk bidirektional auf dem ersten Kanal K1 und empfängt von ihrem linken und rechten direkten Nachbar unidirektional über den zweiten Kanal K2.

Die weitere Funkeinrichtung Fk+3 kommuniziert mit ihrem übernächsten rechten Nachbarn Fk+5 bidirektional auf dem ersten Kanal K1 und kommuniziert mit dem übernächsten linken Nachbarn Fk+1 bidirektional auf dem zweiten Kanal K2.

Die weitere Funkeinrichtung Fk+1 kommuniziert mit ihrem übernächsten rechten Nachbarn Fk+3 bidirektional auf dem zweiten Kanal K2 und kommuniziert mit dem übernächsten linken Nachbarn Fk-1 (nicht gezeigt) bidirektional auf dem dritten Kanal K3.

Mit anderen Worten, jede weitere Funkeinrichtung Fi empfängt Daten von ihren direkt benachbarten weiteren Funkeinrichtungen auf einem der drei verschiedenen Kanäle, kommuniziert bidirektional mit ihrem übernächsten Nachbarn in einer ersten Richtung entlang der Fahrstrecke S auf einem anderen der drei Kanäle und kommuniziert mit ihrem übernächsten Nachbarn in einer zweiten, der ersten Richtung entgegengesetzten Richtung auf einem letzten der drei Kanäle.

In dieser Mehrkanal-Konfiguration verwenden die drei benachbarte weiteren Funkeinrichtungen Fk, Fk+1, Fk+2 den ersten Funkkanal K1, in der Weise, dass die mittlere Fk+1 auf dem ersten Funkkanal K1 Datenpakete ausschließlich empfängt und die beiden direkt benachbarten äußeren Fk und Fk+2 Aussendungen von Datenpaketen auf diesem Kanal vornehmen.

Erst bei dem Triplet Fk+3, Fk+4, Fk+5 nehmen die beiden direkt benachbarten äußeren Funkeinrichtungen Fk+3 und Kk+5 wieder Aussendungen von Datenpaketen auf diesem Kanal K1 vor, wobei die mittlere Funkeinrichtung Fk+4 auf dem Kanal K1 Datenpakete ausschließlich empfängt.

Dadurch kann das Hidden-Node-Problem auf einfache Weise gelöst werden.

Bei dem erfindungsgemäßen Kommunikationsnetzwerk KN wird der zusätzliche Funkkanal K4, welcher zu den drei Funkkanälen K1, K2 und K3 verschieden ist, zur Kommunikation von der mobilen Funkeinrichtung FT des Zuges T zur Kette K der von den weiteren Funkeinrichtungen Fi gebildeten Knoten verwendet - und zwar ausschließlich zum Senden von Datenpaketen zur Kette K. Ein Empfang von Datenpaketen auf diesem Kanal K4 durch die mobilen Funkeinrichtung FT findet also nicht statt.

Zum Empfang von Daten auf den drei Funkkanälen K1, K2 und K3 weist die mobile Funkeinrichtung FT drei Empfangseinheiten E1, E2, E3 mit jeweils einer omnidirektionalen Antenne auf. Die erste Empfangseinheit E1 empfängt Datenpakete auf dem ersten Kanal K1. Die zweite Empfangseinheit E2 empfängt Datenpakete auf dem zweiten Kanal K2. Und die dritte Empfangseinheit E3 empfängt Datenpakete auf dem dritten Kanal K3.

Die mobile Funkeinrichtung ist zusätzlich mit einer Sendeeinheit S4 mit omnidirektionaler Antenne ausgestattet, welche auf eine zusätzliche Frequenz eingestellt ist - sich also des zusätzlichen Funkkanals K4 bedient. Die mobile Funkeinrichtung bedient sich dieses zusätzlichen Funkkanals K4 ausschließlich zum Versand von Datenpaketen, nicht jedoch um Datenpakete zu empfangen.

Auf diese Weise stören die Übertragungen von der mobilenFunkeinrichtung FT des Zuges T nicht die Übertragungen vonden Knoten Fi der Kette.

Jede der weiteren Funkeinrichtungen Fi - also jeder Knoten der Kette K ist mit einer zusätzlichen Empfangseinrichtung E4 ausgestattet, welches auf eine zusätzliche Frequenz eingestellt ist, um sich des zusätzlichen Funkkanal K4 ausschließlich zum Empfang von Datenpaketen zu bedienen. In einem jeweiligen Knoten Fi der Kette wird die jeweilige zusätzliche Empfangseinrichtung E4 also nur zum Empfangen, insbesondere von Datenpaketen von der mobilen Funkeinrichtung FT verwendet.

Bei dem gezeigten Kommunikationsnetzwerk weist auch die andere Funkeinrichtung FTCC Zum Empfang von Daten auf den drei Funkkanälen K1, K2 und K3 drei Empfangseinheiten E1, E2, E3 mit jeweils einer omnidirektionalen Antenne auf. Die erste Empfangseinheit E1 empfängt Datenpakete auf dem ersten Kanal K1. Die zweite Empfangseinheit E2 empfängt Datenpakete auf dem zweiten Kanal K2. Und die dritte Empfangseinheit E3 empfängt Datenpakete auf dem dritten Kanal K3.

Die andere Funkeinrichtung FTCC ist zusätzlich mit einer Sendeeinheit S4 mit omnidirektionaler Antenne ausgestattet, welche auf die zusätzliche Frequenz eingestellt ist - sich also auch des zusätzlichen Funkkanals K4 bedient. Die andere Funkeinrichtung bedient sich dieses zusätzlichen Funkkanals K4 ausschließlich zum Versand von Datenpaketen, nicht jedoch um Datenpakete zu empfangen.

In einem jeweiligen Knoten Fi der Kette wird die jeweilige zusätzliche Empfangseinrichtung E4 also auch zum Empfangen von Datenpaketen von der anderen Funkeinrichtung FTCC verwendet.

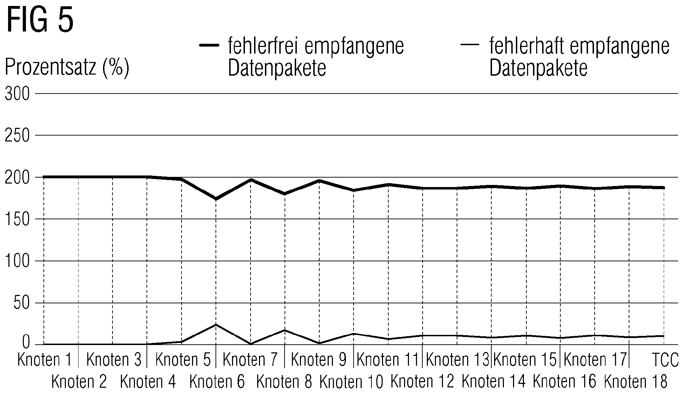

Figur 5 zeigt die Ergebnisse einer Computersimulation, welche zu einem Szenario des in der Figur 3 gezeigten Kommunikationsnetzwerkes durchgeführt wurde.

Wie schon bei der Computersimulation, deren Ergebnisse in der Figur 2 gezeigt sind, wurde auch bei der Computersimulation des erfindungsgemäßen Kommunikationsnetzwerkes ein Szenario mit einer mobilen Funkeinrichtung FT eines Zuges, einer anderen Funkeinrichtung FTCC und einer Kette K von 20 Knoten Fi gewählt.

Es ist ersichtlich, dass die Störungen, welche bei dem in der Figur 1 gezeigten Kommunikationsnetzwerk auftreten, bei dem erfindungsgemäßen Kommunikationsnetzwerk gemäß Figur 3 sehr effektiv beseitigt sind. Die in Figur 5 erkennbaren Datenpaketverluste sind im Vergleich zu Figur 2 auf 0,4% abgefallen.

Bei dem Kommunikationsnetzwerk KN kann es sich beispielsweise um ein WLAN (Wireless Area Network) beziehungsweise Wi-Fi gemäß der Standardfamilie IEEE 802.11 handeln. Hierbei kann zum Beispiel die Norm 802.11p zur Kommunikation zwischen dem Zug T und den weiteren Funkeinrichtungen Fi verwendet werden und eine oder mehrere der Normen 802.11abg/802.11n/802.11ac für die Kommunikation zwischen den weiteren Funkeinrichtungen Fi. Alternativ hierzu kann die Kommunikation zwischen dem Zug T und der Strecke beziehungsweise den weiteren Funkeinrichtungen Fi beispielsweise auch gemäß dem Mobilfunkstandard LTE (Long Term Evolution) erfolgen und die Kommunikation zwischen den streckenseitigen Komponenten beziehungsweise Netzknoten mittels WLAN beziehungsweise Wi-Fi.

Damit stellt der zusätzliche Funkkanal K4 einen dedizierten Funkkanal (dedizierte Frequenz) für, insbesondere Züge in einem Kommunikationsnetzwerk, insbesondere einem Ad-Hoc-Kommunikationsnetzwerk zur kontinuierlichen Kommunikation zwischen den Zügen und streckenseitiger Infrastruktur dar.

## Patentansprüche

1. Kommunikationsnetzwerk (KN), insbesondere Ad-hoc-Kommunikationsnetzwerk, mit zumindest einer mobilen Funkeinrichtung (FT) und mit einer Mehrzahl (m) von an einer Fahrstrecke (S) der mobilen Funkeinrichtung (FT) installierten weiteren Funkeinrichtungen (F1, ..., Fm), welche nachfolgend als fahrstreckenseitige Funkeinrichtungen (F1, ..., Fm) bezeichnet sind,
wobei
- die fahrstreckenseitigen Funkeinrichtungen derart angeordnet sind, dass sich in beiden Richtungen (R1, R2) entlang der Fahrstrecke (S) in Funkreichweite jeder der fahrstreckenseitigen Funkeinrichtungen mindestens zwei andere fahrstreckenseitige Funkeinrichtungen befinden,
- eine jeweilige (Fi) der fahrstreckenseitigen Funkeinrichtungen geeignet ausgebildet ist, sich in jeder der beiden Richtungen (R1, R2) der Fahrtrecke (S) zur Kommunikation mit anderen der weiteren Funkeinrichtungen jeweils eines Funkkanalpaares (A oder B oder C) zu bedienen,
- die Funkkanalpaare (A, B, C) derart aus drei verschiedenen Funkkanälen (K1, K2, K3) gebildet sind, dass sich die beiden Funkkanalpaare (A und B, B und C bzw. C und A) einer jeweiligen (Fi) der fahrstreckenseitigen Funkeinrichtungen hinsichtlich eines Funkkanals unterscheiden, und
- jeweilige drei aufeinanderfolgende (Fk, Fk+1, Fk+2) der fahrstreckenseitigen Funkeinrichtungen derart eingerichtet sind, dass sie sich in alternierender Weise der drei verschiedenen Funkkanäle bedienen,
indem eine jeweilige (Fi) der fahrstreckenseitigen Funkeinrichtungen eine erste Empfangseinheit (E) sowie zwei Sende- und Empfangseinheiten aufweist und
mittels der ersten Empfangseinheit (E) Daten von ihren direkt benachbarten fahrstreckenseitigen Funkeinrichtungen auf einem der drei verschiedenen Funkkanäle empfängt,
mittels einer ersten der zwei Sende- und Empfangseinheiten bidirektional mit der übernächsten fahrstreckenseitigen Funkeinrichtung und unidirektional mit der nächsten fahrstreckenseitigen Funkeinrichtung in einer ersten der beiden Richtungen entlang der Fahrstrecke (S) auf einem anderen der drei Funkkanäle kommuniziert und
mittels einer zweiten der zwei Sende- und Empfangseinheiten bidirektional mit der übernächsten fahrstreckenseitigen Funkeinrichtung und unidirektional mit der nächsten fahrstreckenseitigen Funkeinrichtung in der zweiten, der ersten Richtung entgegengesetzten Richtung auf einem letzten der drei Funkkanäle kommuniziert,
wobei jede der beiden Sende- und Empfangseinheiten (SE) eingerichtet ist, die von einer der fahrstreckenseitigen Funkeinrichtungen empfangenen Daten in der gleichen Richtung an die nächste und die übernächste fahrstreckenseitigen Funkeinrichtung weiterzuleiten,
- die mobile Funkeinrichtung (FT) für jeden der drei Funkkanäle (K1, K2, K3) jeweils eine Empfangseinheit (E1, E2, E3) enthält und eingerichtet ist, sich der drei Funkkanäle ausschließlich zum Empfang von Daten, nämlich zum Empfang von Daten von den fahrstreckenseitigen Funkeinrichtungen zu bedienen,
- ein zu den drei Funkkanälen (K1, K2, K3) verschiedener zusätzlicher Funkkanal (K4) vorgesehen ist,
- die mobile Funkeinrichtung (FT) eine Sendeeinheit (S4) enthält, die ausgebildet ist, sich des zusätzlichen vierten Funkkanals (K4) ausschließlich zum Versand von Daten, nämlich zum Versand von Daten an die fahrstreckenseitigen Funkeinrichtungen (F1, ..., Fm), zu bedienen, und
- die fahrstreckenseitigen Funkeinrichtungen (F1, ..., Fm) jeweils eine zweite Empfangseinheit (E4) enthalten, die jeweils ausgebildet ist, sich des zusätzlichen vierten Funkkanals (K4) ausschließlich zum Empfang von Daten, nämlich zum Empfang von Daten von der mobilen Funkeinrichtung (FT), zu bedienen.

2. Kommunikationsnetzwerk (KN) nach Anspruch 1,
**dadurch gekennzeichnet, dass**
mit der mobilen Funkeinrichtung (FT) ein Kommunikationsteilnehmer (TC), insbesondere eine fahrzeugseitige Kontroll- und Steuereinheit, verbunden ist, welcher in einem Fahrzeug (T), insbesondere einem spurgebundenen Fahrzeug, installiert ist.

3. Kommunikationsnetzwerk (KN) nach einem der Ansprüche 1 oder 2,
**dadurch gekennzeichnet, dass**
zumindest ein anderer Kommunikationsteilnehmer (TCC), insbesondere eine streckenseitige Kontroll- und Steuereinheit, mit einer der fahrstreckenseitigen Funkeinrichtungen (Fi) oder mit einer anderen Funkeinrichtung (FTCC) verbunden ist.

4. Kommunikationsnetzwerk (KN) nach Anspruch 3,
**dadurch gekennzeichnet, dass**
- die andere Funkeinrichtung (FTCC) für jeden der drei Funckanäle (K1, K2, K3) jeweils eine Empfangseinheit (E1, E2, E3) enthält und eingerichtet ist, sich der drei Funkkanäle ausschließlich zum Empfang von Daten, nämlich zum Empfang von Daten von den fahrstreckenseitigen Funkeinrichtungen zu bedienen,
- die andere Funkeinrichtung (FTCC) eine Sendeeinheit (S4) enthält, die ausgebildet ist, sich des zusätzlichen vierten Funkkanals (K4) ausschließlich zum Versand von Daten, nämlich zum Versand von Daten an die fahrstreckenseitigen Funkeinrichtungen (F1, ..., Fm), zu bedienen, und
- die jeweilige zweite Empfangseinheit (E4) der fahrstreckenseitigen Funkeinrichtungen (F1, ..., Fm) jeweils eingerichtet ist, sich des zusätzlichen vierten Funkkanals (K4) auch zum Empfang von Daten von der anderen Funkeinrichtung (FTCC) zu bedienen.

5. Verfahren zum Betrieb eines Kommunikationsnetzwerkes (KN), insbesondere eines Ad-hoc-Kommunikationsnetzwerkes, welches mit zumindest einer mobilen Funkeinrichtung (FT) und mit einer Mehrzahl (m) von an einer Fahrstrecke (S) der mobilen Funkeinrichtung (FT) installierten weiteren Funkeinrichtungen (F1, ..., Fm), welche nachfolgend als fahrstreckenseitige Funkeinrichtungen (F1, ..., Fm) bezeichnet sind, bereitgestellt wird,
wobei
- die fahrstreckenseitigen Funkeinrichtungen derart angeordnet werden, dass sich in beiden Richtungen (R1, R2) entlang der Fahrstrecke (S) in Funkreichweite jeder der fahrstreckenseitigen Funkeinrichtungen mindestens zwei andere fahrstreckenseitige Funkeinrichtungen befinden,
- eine jeweilige der fahrstreckenseitigen Funkeinrichtungen (F1, ..., Fm) sich in jeder der beiden Richtungen (R1, R2) der Fahrstrecke (S) zur Kommunikation mit anderen der weiteren Funkeinrichtungen (F1, ..., Fm) jeweils eines Funkkanalpaares (A oder B oder C) bedient,
- die Funkkanalpaare (A, B, C) derart aus drei verschiedenen Funkkanälen (K1, K2, K3) gebildet werden, dass sich die beiden Funkkanalpaare (A und B, B und C bzw. C und A) einer jeweiligen (Fi) der fahrstreckenseitigen Funkeinrichtungen hinsichtlich eines Funkkanals unterscheiden, und
- jeweilige drei aufeinanderfolgende (Fk, Fk+1, Fk+2) der fahrstreckenseitigen Funkeinrichtungen derart eingerichtet werden, dass sie sich in alternierender Weise der drei verschiedenen Funkkanäle bedienen,
indem eine jeweilige (Fi) der fahrstreckenseitigen Funkeinrichtungen eine erste Empfangseinheit (E) sowie zwei Sende- und Empfangseinheiten aufweist und
mittels der ersten Empfangseinheit (E) Daten von ihren direkt benachbarten fahrstreckenseitigen Funkeinrichtungen auf einem der drei verschiedenen Funkkanäle empfängt,
mittels einer ersten der zwei Sende- und Empfangseinheiten bidirektional mit der übernächsten fahrstreckenseitigen Funkeinrichtung und unidirektional mit der nächsten fahrstreckenseitigen Funkeinrichtung in einer ersten der beiden Richtungen entlang der Fahrstrecke (S) auf einem anderen der drei Funkkanäle kommuniziert und
mittels einer zweiten der zwei Sende- und Empfangseinheiten bidirektional mit der übernächsten fahrstreckenseitigen Funkeinrichtung und unidirektional mit der nächsten fahrstreckenseitigen Funkeinrichtung in der zweiten, der ersten Richtung entgegengesetzten Richtung auf einem letzten der drei Funkkanäle kommuniziert,
wobei jede der beiden Sende- und Empfangseinheiten (SE) die von einer der fahrstreckenseitigen Funkeinrichtungen empfangenen Daten in der gleichen Richtung an die nächste und die übernächste fahrstreckenseitigen Funkeinrichtung weiterleitet,
- die mobile Funkeinrichtung (FT) für jeden der drei Funkkanäle (K1, K2, K3) jeweils eine Empfangseinheit (E1, E2, E3) enthält und sich der drei Funkkanäle ausschließlich zum Empfang von Daten, nämlich zum Empfang von Daten von den fahrstreckenseitigen Funkeinrichtungen bedient, ,
- ein zu den drei Funkkanälen (K1, K2, K3) verschiedener zusätzlicher Funkkanal (K4) vorgesehen wird,
- die mobile Funkeinrichtung (FT) eine Sendeeinheit (S4) enthält, die sich des zusätzlichen vierten Funkkanals (K4) ausschließlich zum Versand von Daten, nämlich zum Versand von Daten an die fahrstreckenseitigen Funkeinrichtungen (F1, ..., Fm), bedient, und
- die fahrstreckenseitigen Funkeinrichtungen (F1, ..., Fm) jeweils eine zweite Empfangseinheit (E4) enthalten, die sich jeweils des zusätzlichen vierten Funkkanals (K4) ausschließlich zum Empfang von Daten, nämlich zum Empfang von Daten von der mobilen Funkeinrichtung (FT), bedient.

6. Verfahren nach Anspruch 5,
**dadurch gekennzeichnet, dass**
mit der mobilen Funkeinrichtung (FT) ein Kommunikationsteilnehmer (TC), insbesondere eine fahrzeugseitige Kontroll- und Steuereinheit, verbunden wird, welcher in einem Fahrzeug (T), insbesondere einem spurgebundenen Fahrzeug, installiert wird.

7. Verfahren nach einem der Ansprüche 5 oder 6,
**dadurch gekennzeichnet, dass**
zumindest ein anderer Kommunikationsteilnehmer (TCC), insbesondere eine streckenseitige Kontroll- und Steuereinheit, mit einer (Fi) der fahrstreckenseitigen Funkeinrichtungen (F1, ..., Fm) oder mit einer anderen Funkeinrichtung (FTCC) verbunden wird.

8. Verfahren nach Anspruch 7,
**dadurch gekennzeichnet, dass**
- die andere Funkeinrichtung (FTCC) für jeden der drei Funckanäle (K1, K2, K3) jeweils eine Empfangseinheit (E1, E2, E3) enthält und sich der drei Funkkanäle ausschließlich zum Empfang von Daten, nämlich zum Empfang von Daten von den fahrstreckenseitigen Funkeinrichtungen bedient,
- die andere Funkeinrichtung (FTCC) eine Sendeeinheit (S4) enthält, die sich des zusätzlichen vierten Funkkanals (K4) ausschließlich zum Versand von Daten, nämlich zum Versand von Daten an die fahrstreckenseitigen Funkeinrichtungen (F1, ..., Fm), bedient, und
- die jeweilige zweite Empfangseinheit (E4) der fahrstreckenseitigen Funkeinrichtungen (F1, ..., Fm) sich jeweils des zusätzlichen vierten Funkkanals (K4) auch zum Empfang von Daten von der anderen Funkeinrichtung (FTCC) bedient.

## Claims

1. Communication network (KN), in particular an ad-hoc communication network, having at least one mobile wireless facility (FT) and having a plurality (m) of further wireless facilities (Fi, ..., Fm) that are installed on a travel route (S) of the mobile wireless facility (FT), which are referred to below as track-side wireless facilities (Fi, ..., Fm),
wherein
- the track-side wireless facilities are arranged such that at least two other track-side wireless facilities are located in both directions (R1, R2) along the travel route (S) in radio range of each of the track-side wireless facilities,
- a respective wireless facility (Fi) of the track-side wireless facilities is configured in a suitable manner so as to use respectively a wireless channel pair (A or B or C) in each of the two directions (R1, R2) of the travel route (S) for communicating with other wireless facilities of the further wireless facilities,
- the wireless channel pairs (A, B, C) are formed from three different wireless channels (K1, K2, K3) in such a manner that the two wireless channel pairs (A and B, B and C or C and A) of a respective wireless facility (Fi) of the track-side wireless facilities (F1, ..., Fm) differ with respect to a wireless channel, and
- a respective three successive wireless facilities (Fk, Fk+1, Fk+2) of the track-side wireless facilities are configured such that they use the three different wireless channels in an alternating manner,
in that a respective wireless facility (Fi) of the track-side wireless facilities has a first receiving unit (E) as well as two transmitting and receiving units and,
by means of the first receiving unit (E), receives data from the track-side wireless facilities directly adjacent thereto on one of the three different wireless channels,
by means of a first of the two transmitting and receiving units, communicates in a bidirectional manner with the next-but-one track-side wireless facility and communicates in a unidirectional manner with the next track-side wireless facility in a first of the two directions along the travel route (S) on one other of the three wireless channels and,
by means of a second of the two transmitting and receiving units, communicates in a bidirectional manner with the next-but-one track-side wireless facility and communicates in a unidirectional manner with the next track-side wireless facility in the second direction which is opposite the first direction on a last of the three wireless channels,
wherein each of the two transmitting and receiving units (SE) are configured to forward the data received by one of the track-side wireless facilities to the next and next-but-one track-side wireless facility in the same direction,
- the mobile wireless facility (FT) for each of the three wireless channels (K1, K2, K3) contains a receiving unit (E1, E2, E3) in each case and is configured to use the three wireless channels exclusively for receiving data, namely for receiving data from the track-side wireless facilities,
- an additional wireless channel (K4) is provided which is different from the three wireless channels (K1, K2, K3),
- the mobile wireless facility (FT) contains a transmitting unit (S4) which is designed to use the additional fourth wireless channel (K4) exclusively for transmitting data, namely for transmitting data to the track-side wireless facilities (F1, ..., Fm), and
- the track-side wireless facilities (F1, ..., Fm) each contain a second receiving unit (E4), which is designed in each case to use the additional fourth wireless channel (K4) exclusively for receiving data, namely for receiving data from the mobile wireless facility (FT).

2. Communication network (KN) according to claim 1,
**characterised in that**
a communication participant (TC), in particular a vehicle-side monitoring and control unit, is connected to the mobile wireless facility (FT), said communication participant being installed in a vehicle (T), in particular in a rail-born vehicle.

3. Communication network (KN) according to one of claims 1 or 2,
**characterised in that**
at least one other communication participant (TCC), in particular a track-side monitoring and control unit, is connected to one of the track-side wireless facilities (Fi) or to another wireless facility (FTCC).

4. Communication network (KN) according to claim 3,
**characterised in that**
- the other wireless facility (FTCC) contains a receiving unit (E1, E2, E3) for each of the three wireless channels (K1, K2, K3) and is configured to use the three wireless channels exclusively for receiving data, namely for receiving data from the track-side wireless facilities,
- the other wireless facility (FTCC) contains a transmitting unit (S4) which is designed to use the additional fourth wireless channel (K4) exclusively for forwarding data, namely for forwarding data to the track-side wireless facilities (F1, ..., Fm), and
- the respective second receiving unit (E4) of the track-side wireless facilities (F1, ..., Fm) is configured in each case to use the additional fourth wireless channel (K4) also for receiving data from the other wireless facility (FTCC).

5. Method for operating a communication network (KN), in particular an ad-hoc communication network, which is provided with at least one mobile wireless facility (FT) and with a plurality (m) of further wireless facilities (F1, ..., Fm) that are installed on a travel route (S) of the mobile wireless facility, which are referred to below as track-side wireless facilities (F1, ..., Fm),
wherein
- the track-side wireless facilities are arranged such that at least two other track-side wireless facilities are located in both directions (R1, R2) along the travel route (S) in radio range of each of the track-side wireless facilities,
- a respective wireless facility of the track-side wireless facilities (F1, ..., Fm) uses one wireless channel pair (A or B or C) in each of the two directions (R1, R2) of the travel route (S) in each case for communicating with other of the further wireless facilities (F1, ..., Fm),
- the wireless channel pairs (A, B, C) are formed from three different wireless channels (K1, K2, K3) in such a manner that the two wireless channel pairs (A and B, B and C or C and A) of a respective wireless facility (Fi) of the track-side wireless facilities differ with respect to a wireless channel, and
- a respective three successive wireless facilities (Fk, Fk+1, Fk+2) of the track-side wireless facilities of the track-side wireless facilities are configured such that they use the three different wireless channels in an alternating manner,
in that a respective one (Fi) of the track-side wireless facilities has a first receiving unit (E) as well as two transmitting and receiving units and,
by means of the first receiving unit (E), receives data from the track-side wireless facilities directly adjacent thereto on one of the three different wireless channels,
by means of a first of the two transmitting and receiving units, communicates in a bidirectional manner with the next-but-one track-side wireless facility and communicates in a unidirectional manner with the next track-side wireless facility in a first of the two directions along the travel route (S) on another of the three wireless channels and,
by means of a second of the two transmitting and receiving units, communicates in a bidirectional manner with the next-but-one track-side wireless facility and communicates in a unidirectional manner with the next track-side wireless facility in the second direction which is opposite the first direction on a last of the three wireless channels,
wherein each of the two transmitting and receiving units (SE) forwards the data received by one of the track-side wireless facilities to the next and next-but-one track-side wireless facility in the same direction,
- the mobile wireless facility (FT) for each of the three wireless channels (K1, K2, K3) contains a receiving unit (E1, E2, E3) in each case and uses the three wireless channels exclusively for receiving data, namely for receiving data from the track-side wireless facilities,
- an additional wireless channel (K4) is provided which is different from the three wireless channels (K1, K2, K3),
- the mobile wireless facility (FT) contains a transmitting unit (S4) which uses the additional fourth wireless channel (K4) exclusively for transmitting data, namely for transmitting data to the track-side wireless facilities (F1, ..., Fm), and
- the track-side wireless facilities (F1, ..., Fm) contain a second receiving unit (E4) in each case, which uses the additional fourth wireless channel (K4) exclusively for receiving data, namely for receiving data from the mobile wireless facility (FT).

6. Method according to claim 5,
**characterised in that**
a communication participant (TC), in particular a vehicle-side monitoring and control unit, is connected to the mobile wireless facility (FT), said communication participant being installed in a vehicle (T) in particular in a rail-born vehicle.

7. Method according to one of claims 5 or 6,
**characterised in that**
at least one other communication participant (TCC), in particular a track-side monitoring and control unit, is connected to one (Fi) of the track-side wireless facilities (F1, ...,Fm) or to another wireless facility (FTCC).

8. Method according to claim 7,
**characterised in that**
- the other wireless facility (FTCC) contains a receiving unit (E1, E2, E3) for each of the three wireless channels (K1, K2, K3) in each case and uses the three wireless channels exclusively for receiving data, namely for receiving data from the track-side wireless facilities,
- the other wireless facility (FTCC) contains a transmitting unit (S4), which uses the additional fourth wireless channel (K4) exclusively for forwarding data, namely for forwarding data to the track-side wireless facilities (F1, ..., Fm), and
- the respective second receiving unit (E4) of the track-side wireless facilities (F1, ..., Fm) use the additional fourth wireless channel (K4) in each case also for receiving data from the other wireless facility (FTCC).

## Revendications

1. Réseau (KN) de communication, en particulier réseau de communication ad-hoc, comprenant au moins un dispositif (FT) radio mobile et comprenant une pluralité (m) d'autres dispositifs (F1, ..., Fm) radio installés sur une voie (S) de circulation du dispositif (FT) radio mobile, qui seront désignés dans ce qui suit comme étant des dispositifs (F1, ..., Fm) radio sur la voie de circulation,
dans lequel
- les dispositifs radio sur la voie de circulation sont disposés, de manière à ce que dans les deux sens (R1, R2) le long de la voie (S) de circulation, dans la portée radio de chacun des dispositifs radio sur la voie de circulation, se trouvent au moins deux autres dispositifs radio sur la voie de circulation,
- un respectif (Fi) des dispositifs radio sur la voie de circulation est constitué, de manière appropriée pour se servir, dans chacun des deux sens (R1, R2) de la voie (S) de circulation pour la communication avec d'autres des autres dispositifs radio, respectivement d'une paire (A ou B ou C) de canal radio,
- les paires (A, B, C) de canal radio sont formées de trois canaux (K1, K2, K3) radio différents, de manière à ce que les deux paires (A et B, B et C et respectivement C et A) de canal radio de l'un respectif (Fi) des dispositifs radio sur la voie de circulation se distinguent en ce qui concerne un canal radio, et
- respectivement trois dispositifs radio sur la voie de circulation, qui se succèdent (Fk, Fk+1, Fk+2), sont agencés pour se servir d'une manière alternée des trois canaux radio différents,
par le fait que l'un respectif (Fi) des dispositifs radio sur la voie de circulation a une première unité (E) de réception ainsi que deux unités d'émission et de réception et
reçoit, au moyen de la première unité (E) de réception, des données, sur l'un des trois canaux radio différents, de ses dispositifs radio voisins directement sur la voie de circulation,
au moyen d'une première des deux unités d'émission et de réception communique, le long de la voie (S) de circulation sur un autre des trois canaux radio, bidirectionnellement avec le dispositif radio sur la voie de circulation le plus proche en second et unidirectionnellement avec le dispositif radio sur la voie de circulation le plus proche dans un premier des deux sens, et
au moyen d'une deuxième des deux unités d'émission et de réception, communique, sur un dernier des trois canaux radio, bidirectionnellement avec le dispositif radio sur la voie de circulation le plus proche en second et unidirectionnellement avec le dispositif radio sur la voie de circulation le plus proche dans le deuxième sens opposé au premier sens,
dans lequel chacune des deux unités (SE) d'émission et de réception est agencée pour acheminer les données reçues par l'un des dispositifs radio sur la voie de circulation dans le même sens au dispositif radio le plus proche et au dispositif radio sur la voie de circulation le plus proche en second,
- le dispositif (FT) radio mobile contient pour chacun des trois canaux (K1, K2, K3) radio respectivement une unité (E1, E2, E3) de réception, et est agencé pour se servir des trois canaux radio exclusivement pour la réception de données, à savoir pour la réception de données des dispositifs radio sur la voie de circulation,
- il est prévu un canal (K4) radio supplémentaire différent des trois canaux (K1, K2, K3) radio,
- le dispositif (FT) radio mobile contient une unité (S4) d'émission, qui est constituée pour se servir du quatrième canal (K4) radio supplémentaire exclusivement pour l'envoi de données, à savoir pour l'envoi de données aux dispositifs (F1, ..., Fm) radio, sur la voie de circulation, et
- les dispositifs (F1, ..., Fm) radio sur la voie de circulation contiennent respectivement une deuxième unité (E4) de réception, qui est constituée respectivement pour se servir du quatrième canal (K4) radio supplémentaire exclusivement pour la réception de données, à savoir pour la réception de données du dispositif (FT) radio mobile.

2. Réseau (KN) de communication suivant la revendication 1, **caractérisé en ce qu'**
au dispositif (FT) radio mobile est relié un participant (TC) à la communication, en particulier une unité de contrôle et de commande embarquée, qui est montée dans un véhicule (T), en particulier dans un véhicule guidé sur rail.

3. Réseau (KN) de communication suivant l'une des revendications 1 ou 2,
**caractérisé en ce qu'**
un autre participant (TCC) à la communication, en particulier une unité de contrôle et de commande sur la voie, est reliée à l'un des dispositifs (Fi) radio sur la voie de circulation ou à un autre dispositif (FTCC) radio.

4. Réseau (KN) de communication suivant la revendication 3, **caractérisé en ce que**
- l'autre dispositif (FTCC) radio contient pour chacun des trois canaux (K1, K2, K3) radio respectivement une unité (E1, E2, E3) de réception et est agencé pour se servir des trois canaux radio exclusivement pour la réception de données, à savoir pour la réception de données, des dispositifs radio sur la voie de circulation,
- l'autre dispositif (FTCC) radio contient une unité (S4) d'émission, qui est constituée pour se servir du quatrième canal (K4) radio supplémentaire exclusivement pour l'envoi de données, à savoir pour l'envoi de données aux dispositifs (F1, ..., Fm) radio, sur la voie de circulation, et
- la deuxième unité (E4) de réception respective des dispositifs (F1, ..., Fm) radio sur la voie de circulation est agencée respectivement, pour se servir du quatrième canal (K4) radio supplémentaire également pour la réception de données de l'autre dispositif (FTCC) radio.

5. Procédé pour faire fonctionner un réseau (KN) de communication, en particulier un réseau de communication ad-hoc, qui dispose d'au moins un dispositif (FT) radio mobile et d'une pluralité (m) d'autres dispositifs (F1, ..., Fm) radio installés sur une voie (S) de circulation du dispositif (FT) radio mobile et désignés dans ce qui suit comme des dispositifs (F1, ..., Fm) radio sur la voie de circulation,
dans lequel
- on met les dispositifs radio sur la voie de circulation, de manière à ce qu'il se trouve, dans les deux sens (R1, R2) le long de la voie (S) de circulation dans la portée radio de chacun des dispositifs radio sur la voie de circulation, au moins deux autres dispositifs radio sur la voie de circulation,
- un respectif des dispositifs (F1, ..., Fm) radio sur la voie de circulation se sert, dans chacun des deux sens (R1, R2) de la voie (S) de circulation, pour la communication avec d'autres des autres dispositifs (F1, ..., Fm) radio respectivement d'une paire (A ou B ou C) de canal radio,
- les paires (A, B, C) de canal radio sont formées de trois canaux (K1, K2, K3) radio différents, de manière à ce que les deux paires (A et B, B et C et respectivement C et A) de canal radio de l'un respectif (Fi) des dispositifs radio sur la voie de circulation se distingue en ce qui concerne un canal radio, et
- respectivement trois dispositifs radio sur la voie de circulation, qui se succèdent (Fk, Fk+1, Fk+2), sont agencés pour se servir d'une manière alternée des trois canaux radio différents,
par le fait que l'un respectif (Fi) des dispositifs radio sur la voie de circulation a une première unité (E) de réception ainsi que deux unités d'émission et de réception et
reçoit, au moyen de la première unité (E) de réception, des données sur l'un des trois canaux radio différents de ses dispositifs radio sur la voie de circulation voisins directement,
au moyen d'une première des deux unités d'émission et de réception communique, dans un premier des deux sens le long de la voie (S) de circulation sur un autre des trois canaux radio, bidirectionnellement avec le dispositif radio sur la voie de circulation le plus proche en second et unidirectionnellement avec le dispositif radio sur la voie de circulation le plus proche et
au moyen d'une deuxième des deux unités d'émission et de réception, communique, sur un dernier des trois canaux radio, dans le deuxième sens contraire au premier sens, bidirectionnellement avec le dispositif radio sur la voie de circulation le plus proche en second et unidirectionnellement avec le dispositif radio sur la voie de circulation le plus proche,
dans lequel chacune des deux unités (SE) d'émission et de réception envoie les données reçues par l'un des dispositifs radio sur la voie de circulation dans le même sens au dispositif radio sur la voie de circulation le plus proche et au dispositif radio le plus proche en second,
- le dispositif (FT) radio mobile contient, pour chacun des trois canaux (K1, K2, K3) radio, respectivement une unité (E1, E2, E3) de réception et se sert des trois canaux radio exclusivement pour la réception de données, à savoir pour la réception de données des dispositifs radio sur la voie de circulation,
- on prévoit un canal (K4) radio supplémentaire différent des trois canaux (K1, K2, K3) radio,
- le dispositif (FT) radio mobile contient une unité (S4) d'émission, qui se sert du quatrième canal (K4) radio supplémentaire exclusivement pour l'envoi de données, à savoir pour l'envoi de données aux dispositifs (F1, ..., Fm) radio sur la voie de circulation, et
- les dispositifs (F1, ..., Fm) radio sur la voie de circulation contiennent respectivement une deuxième unité (E4) de réception, qui se sert respectivement du quatrième canal (K4) radio supplémentaire exclusivement pour la réception de données, à savoir pour la réception de données du dispositif (FT) radio mobile.

6. Procédé suivant la revendication 5,
**caractérisé en ce que** l'
on relie au dispositif (FT) radio mobile un participant (TC) à la communication, en particulier une unité de contrôle et de commande embarquée sur un véhicule, qui est montée dans un véhicule (T), en particulier dans un véhicule guidé sur rail.

7. Procédé suivant l'une des revendications 5 ou 6,
**caractérisé en ce que** l'
on relie au moins un autre participant (TCC) à la communication, en particulier une unité de contrôle et de commande sur la voie, à l'un (Fi) des dispositifs (F1, ..., Fm) radio sur la voie de circulation ou à un autre dispositif (FTCC) radio.

8. Procédé suivant la revendication 7,
**caractérisé en ce que**
- l'autre dispositif (FTCC) radio contient, pour chacun des trois canaux (K1, K2, K3) radio, respectivement une unité (E1, E2, E3) de réception et se sert des trois canaux radio exclusivement pour la réception de données, à savoir pour la réception de données, des dispositifs radio sur la voie de circulation,
- l'autre dispositif (FTCC) radio contient une unité (S4) d'émission, qui se sert du quatrième canal (K4) radio supplémentaire exclusivement pour l'envoi de données, à savoir pour l'envoi de données aux dispositifs (F1, ..., Fm) radio sur la voie de circulation, et
- la deuxième unité (E4) respective de réception des dispositifs (F1, ..., Fm) radio sur la voie de circulation se sert respectivement du quatrième canal (K4) radio supplémentaire également pour la réception de données de l'autre dispositif (FTCC) radio.
